(19) Europäisches Patentamt
European Patent Office
Office européen des brevets

(11) EP 3 529 342 B1

(12) **EUROPEAN PATENT SPECIFICATION**

(45) Date of publication and mention of the grant of the patent:
**18.03.2020 Bulletin 2020/12**

(21) Application number: **17777871.9**

(22) Date of filing: **27.09.2017**

(51) Int Cl.:
*C08L 71/02* (2006.01) *C11D 1/06* (2006.01)
*C11D 1/24* (2006.01) *C11D 1/29* (2006.01)
*C11D 1/34* (2006.01) *C11D 1/37* (2006.01)
*C11D 1/72* (2006.01) *C11D 1/722* (2006.01)
*C11D 1/83* (2006.01) *C11D 3/00* (2006.01)
*C11D 3/37* (2006.01) *C11D 3/40* (2006.01)
*C11D 3/42* (2006.01) *C11D 3/50* (2006.01)
*C11D 11/00* (2006.01) *C08G 65/26* (2006.01)

(86) International application number:
**PCT/EP2017/074562**

(87) International publication number:
**WO 2018/072979 (26.04.2018 Gazette 2018/17)**

(54) **WHITENING COMPOSITION**

OPTISCHE AUFHELLERZUSAMMENSETZUNG

COMPOSITION D'AGENT AZURANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.10.2016 EP 16194349**

(43) Date of publication of application:
**28.08.2019 Bulletin 2019/35**

(73) Proprietors:
- **Unilever PLC**
  **London, Greater London EC4Y 0DY (GB)**
  Designated Contracting States:
  **CY GB IE MT**
- **Unilever N.V.**
  **3013 AL Rotterdam (NL)**
  Designated Contracting States:
  **AL AT BE BG CH CZ DE DK EE ES FI FR GR HR HU IS IT LI LT LU LV MC MK NL NO PL PT RO RS SE SI SK SM TR**

(72) Inventors:
- **BATCHELOR, Stephen, Norman**
  **Bebington**
  **Wirral Merseyside CH63 3JW (GB)**
- **BIRD, Jayne, Michelle**
  **Cheshire**
  **CH66 2Ht (GB)**
- **DIEDERICHS, Jan**
  **84508 Burgkirchen (DE)**
- **MUTCH, Kevin, James**
  **65926 Frankfurt am Main (DE)**
- **ROMANSKI, Steffen**
  **65926 Frankfurt am Main (DE)**
- **SCHAEFER, Carsten**
  **65926 Frankfurt am Main (DE)**

(74) Representative: **McHugh, Paul Edward**
**Unilever PLC**
**Unilever Patent Group**
**Colworth House**
**Sharnbrook**
**Bedford**
**Bedfordshire MK44 1LQ (GB)**

(56) References cited:
**EP-A1- 3 208 293** **WO-A1-2016/041679**
**GB-A- 800 159** **US-B1- 7 341 674**

- **KOSSWIG K: "SURFACTANTS", INTERNET CITATION, 15 June 2000 (2000-06-15), pages 1-76, XP002554753, ISBN: 978-3-527-31318-1 Retrieved from the Internet: URL:http://onlinelibrary.wiley.com/doi/10.1002/14356007.a25_747/abstract [retrieved on 2017-03-03]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of Invention

The present invention concerns the use of whitening and brightening laundry compositions.

### Background of the Invention

Maintaining and improving the whiteness and brightness of textiles during domestic laundry is desirable. A problem is the redeposition of soil removed from one garment onto another. The presence of human sebum on garments and in the wash liquor exacerbates the redeposition of soil in a wash. This process leads to an overall loss of whiteness and cleaning across the washing load. There is a need for weight effective laundry benefit agents that reduce the redeposition of soil whilst also increasing stain removal. Such ingredients are preferably biodegradable.

Some laundry compositions comprising resorcinol based compounds are disclosed in WO 2016/041679, GB 800 159 and US 7 341 674.

### Summary of the Invention

There is a need for technologies to reduce redeposition and enhance cleaning in domestic laundry products.

We have found that selected alkoxylated substituted Resorcinol (ASR) dispersants when incorporated into laundry detergents enhance whiteness and brightness of garments during domestic laundering.

In one aspect the present invention provides a laundry detergent composition comprising:

(i) from 0.5 to 20 wt%, preferably 1 to 10 wt%, most preferably 2 to 6 wt%, of an alkoxylated substituted resorcinol dispersant of the following structure:

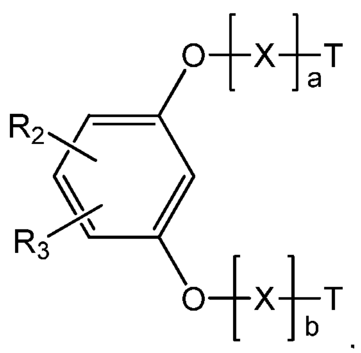

wherein

X is independently selected from: ethoxy; and, mixtures of ethoxy and propoxy groups where the number of ethoxy groups is greater than the number of propoxy groups, and wherein a+b=n and n is from 5 to 40, preferably from 6 to 34; most preferably n is selected from 6; 7; 8; 9; 10; 11; 12; 13; 14; 15; 16; 17; 18; 19 and 20; preferably X is ethoxy;

$R_2$ and $R_3$ are independently selected from: H; C1 to C3 linear or branched alkyl aryl groups; and, aryl groups wherein at least one of $R_2$ and $R_3$ are selected from C1 to C3 linear or branched alkyl aryl groups; and, aryl groups; preferably $R_2$ and $R_3$ are selected from H, styryl and cumyl, most preferably styryl, preferably both $R_2$ and $R_3$ are in the ortho position to the $-O-[X]_n-T$ groups;

T is selected from: H; $CH_3$; $SO_3^-$; $CH_2COO^-$; $PO_3^{2-}$; $C_2H_5$; n-propyl, i-propyl; n-butyl; t-butyl; and, sulfosuccinate, T is preferably H;

(ii) from 0 to 50 wt% surfactant, other than the alkoxylated substituted resorcinol dispersant; preferably the surfactant is selected from: anionic and non-ionic surfactants, preferably the level of surfactant is from 4 to 40 wt%, more preferably 6 to 30 wt%, most preferably 8 to 20 wt%; preferably the weight fraction of non-ionic surfactant/anionic surfactant is from 0 to 0.3, preferably 0 to 0.15, most preferably 0.05 to 0.12; and,

(iii) an active selected from one or more of the following: from 0.001 to 3 wt % perfume; from 0.0001 to 0.5 wt % of a fluorescent agent and/or from 0.0001 wt% to 0.1 wt% shading dye;

wherein the composition comprises a perfume in the range of from 0.001 to 3 wt %.

The laundry detergent composition is preferably selected from a granular detergent powder; and an aqueous laundry liquid detergent; most preferably the laundry detergent composition is an aqueous laundry liquid detergent composition.

In another aspect the present invention provides a domestic method of treating a textile, the method comprising the steps of:

(i) treating a textile with an aqueous solution of the alkoxylated substituted resorcinol dispersant the aqueous solution comprising from 10 ppm to 5000 ppm of the alkoxylated substituted resorcinol dispersant, preferably from 100 ppm to 1000 ppm as defined herein; and, 0 to 6 g/L of a surfactant, preferably 0.2 to 1 g/L, other than the alkoxylated substituted resorcinol dispersant; and an active selected from: 0.1 ppm to 100 ppm of perfume, 1 ppb to 5 ppm of fluorescent agent, and 1 ppb to 1 ppm of shading dye,

(ii) optionally rinsing and drying the textile.

In the method the surfactant is of the type as preferred herein.

In the method, there is an active present in the aqueous solution. The active is selected from: 0.1 ppm to 100 ppm, 1 ppb to 5 ppm of fluorescent agent, and 1 ppb to 1 ppm of shading dye. The level of the perfume in the aqueous solution is preferably from 1 to 10 ppm.

In the method aspects of the present invention the surfactant used is preferably as preferred for the composition aspects of the present invention.

Domestic methods are preferably conducted in a domestic washing machine or by hand washing. The temperature of the wash is preferably from 285 to 335K.

The textile is preferably an item of clothing, bedding or table cloth. Preferred items of clothing are cotton containing shirts, trousers, underwear and jumpers.

## Detailed Description of the Invention

### Alkoxylated substituted resorcinol

In the context of the current invention the alkoxylated substituted resorcinol (ASR) is not considered a surfactant and does not contribute numerically to the surfactant as defined herein.

The most preferred aryl groups are phenyl and substituted phenyl.

C1 to C3 linear or branched alkyl aryl groups are C1 to C3 linear or branched alkyl groups substituted by an aromatic group, for example: styryl, cumyl, benzyl.

A styryl group is $-CH(CH_3)Ph$; a cumyl group is $-C(CH_3)_2Ph$; a benzyl group is $CH_2Ph$, where Ph is phenyl.

The value n is the mole average number of alkoxyl groups. The value of n may be measured using NMR.

Sulfosuccinate has the structure, depicted as the Na salt:

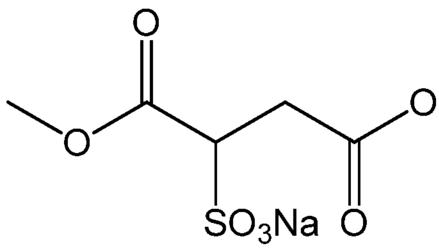

; and,

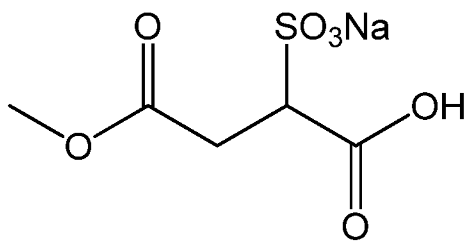

.

Example of structures of the ASR of the invention are:

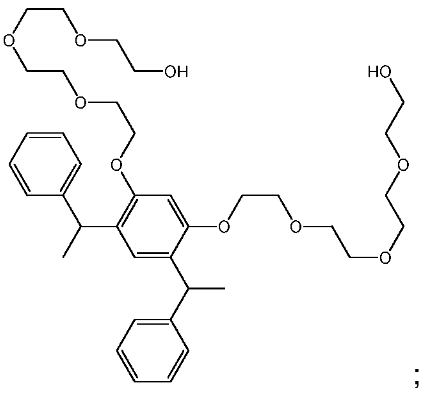

;

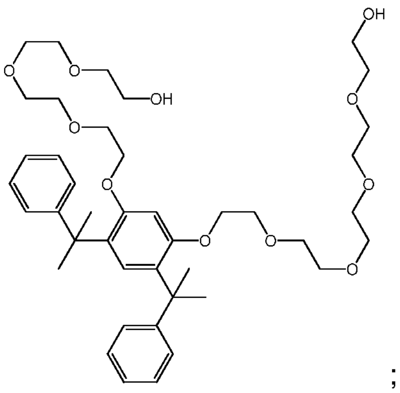

;

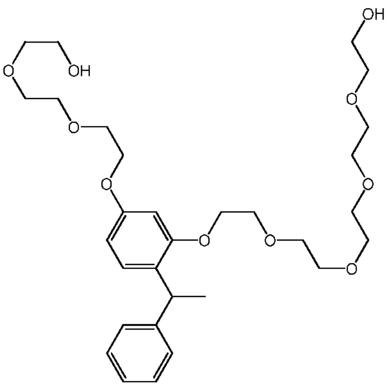

; and,

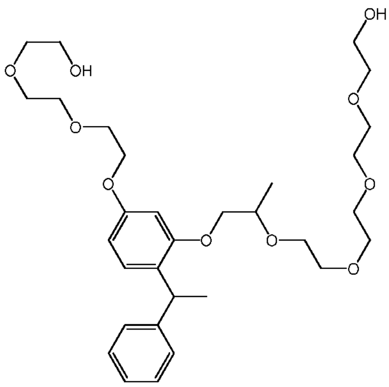

.

## Surfactant

The laundry composition may comprise anionic and non-ionic surfactant (which includes a mixture of the same).

The nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981 or in Anionic Surfactants: Organic Chemistry edited by Helmut W. Stache (Marcel Dekker 1996).

Suitable anionic detergent compounds which may be used are usually water-soluble alkali metal salts of organic sulphates and sulphonates having alkyl radicals containing from about 8 to about 22 carbon atoms, the term alkyl being used to include the alkyl portion of higher alkyl radicals.

Examples of suitable synthetic anionic detergent compounds are sodium and potassium alkyl sulphates, especially those obtained by sulphating higher $C_8$ to $C_{18}$ alcohols, produced for example from tallow or coconut oil, sodium and potassium alkyl $C_9$ to $C_{20}$ benzene sulphonates, particularly sodium linear secondary alkyl $C_{10}$ to $C_{15}$ benzene sulphonates; and sodium alkyl glyceryl ether sulphates, especially those ethers of the higher alcohols derived from tallow or coconut oil and synthetic alcohols derived from petroleum.

The anionic surfactant is preferably selected from: linear alkyl benzene sulphonate; alkyl sulphates; alkyl ether sulphates; alkyl ether carboxylates; soaps; alkyl (preferably methyl) ester sulphonates, and mixtures thereof.

The most preferred anionic surfactants are selected from: linear alkyl benzene sulphonate; alkyl sulphates; alkyl ether sulphates and mixtures thereof. Preferably the alkyl ether sulphate is a $C_{12}$-$C_{14}$ n-alkyl ether sulphate with an average of 1 to 3EO (ethoxylate) units. Sodium lauryl ether sulphate is particularly preferred (SLES). Preferably the linear alkyl benzene sulphonate is a sodium $C_{11}$ to $C_{15}$ alkyl benzene sulphonates. Preferably the alkyl sulphates is a linear or branched sodium $C_{12}$ to $C_{18}$ alkyl sulphates. Sodium dodecyl sulphate is particularly preferred, (SDS, also known as primary alkyl sulphate).

The level of anionic surfactant in the laundry composition is preferably from 4 to 40 wt%, more preferably 6 to 30 wt%, and most preferably 8 to 20 wt%.

Preferably two or more anionic surfactant are present, for example linear alkyl benzene sulphonate together with an alkyl ether sulphate.

Preferably the laundry composition in addition to the anionic surfactant comprises alkyl ethoxylated non-ionic surfactant.

Suitable nonionic detergent compounds which may be used include, in particular, the reaction products of compounds having an aliphatic hydrophobic group and a reactive hydrogen atom, for example, aliphatic alcohols, acids or amides, especially ethylene oxide either alone or with propylene oxide. Specific nonionic detergent compounds are the condensation products of aliphatic $C_8$ to $C_{18}$ primary or secondary linear or branched alcohols with ethylene oxide.

Preferably the alkyl ethoxylated non-ionic surfactant is a $C_8$ to $C_{18}$ primary alcohol with an average ethoxylation of 7EO to 9EO units.

Preferably the surfactants used are saturated.

Also applicable are surfactants such as those described in EP-A-328 177 (Unilever), which show resistance to salting-out, the alkyl polyglycoside surfactants described in EP-A-070 074, and alkyl monoglycosides.

In another aspect the charged surfactant may be a cationic such that the formulation is a fabric conditioner. The detergent compositions based on anionic or anionic/non-ionic surfactants is however the more preferred embodiment.

## Cationic Compound

When the present invention is used as a fabric conditioner it needs to contain a cationic compound.

Most preferred are quaternary ammonium compounds.

It is advantageous if the quaternary ammonium compound is a quaternary ammonium compound having at least one $C_{12}$ to $C_{22}$ alkyl chain.

It is preferred if the quaternary ammonium compound has the following formula:

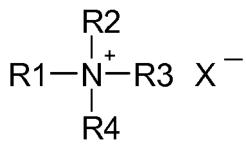

in which $R^1$ is a $C_{12}$ to $C_{22}$ alkyl or alkenyl chain; $R^2$, $R^3$ and $R^4$ are independently selected from $C_1$ to $C_4$ alkyl chains and $X^-$ is a compatible anion. A preferred compound of this type is the quaternary ammonium compound cetyl trimethyl quaternary ammonium bromide.

A second class of materials for use with the present invention are the quaternary ammonium of the above structure in which $R^1$ and $R^2$ are independently selected from $C_{12}$ to $C_{22}$ alkyl or alkenyl chain; $R^3$ and $R^4$ are independently selected from $C_1$ to $C_4$ alkyl chains and $X^-$ is a compatible anion.

The composition optionally comprises a silicone.

## Builders or Complexing Agents

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetra-acetic acid.

Examples of precipitating builder materials include sodium orthophosphate and sodium carbonate.

Examples of calcium ion-exchange builder materials include the various types of water-insoluble crystalline or amorphous aluminosilicates, of which zeolites are well known representatives, e.g. zeolite A, zeolite B (also known as zeolite P), zeolite C, zeolite X, zeolite Y and also the zeolite P-type as described in EP-A-0,384,070.

The composition may also contain 0-65 % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.

Zeolite and carbonate (carbonate (including bicarbonate and sesquicarbonate)) are preferred builders with carbonates being particularly preferred.

The composition may contain as builder a crystalline aluminosilicate, preferably an alkali metal aluminosilicate, more preferably a sodium aluminosilicate. This is typically present at a level of less than 15%w. Aluminosilicates are materials having the general formula:

$0.8\text{-}1.5\ M_2O.\ Al_2O_3.\ 0.8\text{-}6\ SiO_2$

where M is a monovalent cation, preferably sodium. These materials contain some bound water and are required to have a calcium ion exchange capacity of at least 50 mg CaO/g. The preferred sodium aluminosilicates contain 1.5-3.5 $SiO_2$ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).

Preferably the laundry detergent formulation is a non-phosphate built laundry detergent formulation, i.e., contains less than 1 wt% of phosphate. Preferably powder laundry detergent formulations are predominantly carbonate built. Powders, should preferably give an in use pH of 9.5 to 11.

Most preferably the laundry detergent is an aqueous liquid laundry detergent, preferably with a pH of from 7 to 9.

In the aqueous liquid laundry detergent it is preferred that mono propylene glycol is present at a level from 1 to 30 wt%, most preferably 2 to 18 wt%, to provide the formulation with appropriate, pourable viscosity.

## Fluorescent Agent

The composition preferably comprises a fluorescent agent (optical brightener). Fluorescent agents are well known and many such fluorescent agents are available commercially. Usually, these fluorescent agents are supplied and used in the form of their alkali metal salts, for example, the sodium salts.

Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN.

Preferred fluorescers are: sodium 2 (4-styryl-3-sulphophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulophonate, disodium 4,4'-bis{[(4-anilino-6-morpholino-1,3,5-triazin-2-yl)]amino} stilbene-2-2' disulphonate, and disodium 4,4'-bis(2-sulphostyryl)biphenyl.

The total amount of the fluorescent agent or agents used in the composition is from 0.0001 to 0.5 wt %, more preferably 0.005 to 2 wt %, most preferably 0.05 to 0.25 wt %.

## Perfume

The composition preferably comprises a perfume. The perfume is preferably in the range from 0.001 to 3 wt %, more preferably 0.05 to 0.5 wt%, most preferably from 0.1 to 1 wt %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

Preferably the perfume comprises at least one note (compound) from: alpha-isomethyl ionone, benzyl salicylate; citronellol; coumarin; hexyl cinnamal; linalool; Pentanoic acid, 2-methyl-, ethyl ester; octanal; benzyl acetate; 1,6-octadien-3-ol, 3,7-dimethyl-, 3-acetate; cyclohexanol, 2-(1,1-dimethylethyl)-, 1-acetate; delta-damascone; beta-ionone; verdyl acetate; dodecanal; hexyl cinnamic aldehyde; cyclopentadecanolide; benzeneacetic acid, 2-phenylethyl ester;amyl salicylate; beta-caryophyllene; ethyl undecylenate; geranyl anthranilate; alpha-irone; beta-phenyl ethyl benzoate; alpa-santalol; cedrol; cedryl acetate; cedry formate; cyclohexyl salicyate; gamma-dodecalactone; and, beta phenylethyl phenyl acetate.

Useful components of the perfume include materials of both natural and synthetic origin. They include single compounds and mixtures. Specific examples of such components may be found in the current literature, e.g., in Fenaroli's Handbook of Flavor Ingredients, 1975, CRC Press; Synthetic Food Adjuncts, 1947 by M. B. Jacobs, edited by Van Nostrand; or Perfume and Flavor Chemicals by S. Arctander 1969, Montclair, N.J. (USA).

It is commonplace for a plurality of perfume components to be present in a formulation. In the compositions of the present invention it is envisaged that there will be four or more, preferably five or more, more preferably six or more or even seven or more different perfume components.

In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.

The International Fragrance Association has published a list of fragrance ingredients (perfums) in 2011. (http://www.ifraorg.org/en-us/ingredients#.U7Z4hPldWzk)

The Research Institute for Fragrance Materials provides a database of perfumes (fragrances) with safety information.

Perfume top note may be used to cue the whiteness and brightness benefit of the invention.

Some or all of the perfume may be encapsulated, typical perfume components which it is advantageous to encapsulate, include those with a relatively low boiling point, preferably those with a boiling point of less than 300, preferably 100-250 Celsius. It is also advantageous to encapsulate perfume components which have a low CLog P (ie. those which will have a greater tendency to be partitioned into water), preferably with a CLog P of less than 3.0. These materials, of relatively low boiling point and relatively low CLog P have been called the "delayed blooming" perfume

ingredients and include one or more of the following materials:
allyl caproate, amyl acetate, amyl propionate, anisic aldehyde, anisole, benzaldehyde, benzyl acetate, benzyl acetone, benzyl alcohol, benzyl formate, benzyl iso valerate, benzyl propionate, beta gamma hexenol, camphor gum, laevo-carvone, d-carvone, cinnamic alcohol, cinamyl formate, cis-jasmone, cis-3-hexenyl acetate, cuminic alcohol, cyclal c, dimethyl benzyl carbinol, dimethyl benzyl carbinol acetate, ethyl acetate, ethyl aceto acetate, ethyl amyl ketone, ethyl benzoate, ethyl butyrate, ethyl hexyl ketone, ethyl phenyl acetate, eucalyptol, eugenol, fenchyl acetate, flor acetate (tricyclo decenyl acetate), frutene (tricyclco decenyl propionate), geraniol, hexenol, hexenyl acetate, hexyl acetate, hexyl formate, hydratropic alcohol, hydroxycitronellal, indone, isoamyl alcohol, iso menthone, isopulegyl acetate, isoquinolone, ligustral, linalool, linalool oxide, linalyl formate, menthone, menthyl acetphenone, methyl amyl ketone, methyl anthranilate, methyl benzoate, methyl benyl acetate, methyl eugenol, methyl heptenone, methyl heptine carbonate, methyl heptyl ketone, methyl hexyl ketone, methyl phenyl carbinyl acetate, methyl salicylate, methyl-n-methyl anthranilate, nerol, octalactone, octyl alcohol, p-cresol, p-cresol methyl ether, p-methoxy acetophenone, p-methyl acetophenone, phenoxy ethanol, phenyl acetaldehyde, phenyl ethyl acetate, phenyl ethyl alcohol, phenyl ethyl dimethyl carbinol, prenyl acetate, propyl bornate, pulegone, rose oxide, safrole, 4-terpinenol, alpha-terpinenol, and /or viridine. It is commonplace for a plurality of perfume components to be present in a formulation. In the compositions of the present invention it is envisaged that there will be four or more, preferably five or more, more preferably six or more or even seven or more different perfume components from the list given of delayed blooming perfumes given above present in the perfume.

Another group of perfumes with which the present invention can be applied are the so-called ’aromatherapy’ materials. These include many components also used in perfumery, including components of essential oils such as Clary Sage, Eucalyptus, Geranium, Lavender, Mace Extract, Neroli, Nutmeg, Spearmint, Sweet Violet Leaf and Valerian.

It is preferred that the laundry treatment composition does not contain a peroxygen bleach, e.g., sodium percarbonate, sodium perborate, and peracid.

## Polymers

The composition may comprise one or more further polymers. Examples are carboxymethylcellulose, poly (ethylene glycol), poly(vinyl alcohol), polycarboxylates such as polyacrylates, maleic/acrylic acid copolymers and lauryl methacrylate/acrylic acid copolymers.

Polymers present to prevent dye deposition may be present, for example poly(vinylpyrrolidone), poly(vinylpyridine-N-oxide), and poly(vinylimidazole).

## Shading Dye

Dyes are described in Color Chemistry Synthesis, Properties and Applications of Organic Dyes and Pigments, (H Zollinger, Wiley VCH, Zurich, 2003) and, Industrial Dyes Chemistry, Properties Applications. (K Hunger (ed), Wiley-VCH Weinheim 2003).

Shading Dyes for use in laundry detergents preferably have an extinction coefficient at the maximum absorption in the visible range (400 to 700nm) of greater than 5000 L $mol^{-1}$ $cm^{-1}$, preferably greater than 10000 L $mol^{-1}$ $cm^{-1}$. The dyes are blue or violet in colour.

Preferred shading dye chromophores are azo, azine, anthraquinone, and triphenylmethane.

Azo, anthraquinone, phthalocyanine and triphenylmethane dyes preferably carry a net anionic charged or are uncharged. Azine preferably carry a net anionic or cationic charge. Blue or violet shading dyes deposit to fabric during the wash or rinse step of the washing process providing a visible hue to the fabric. In this regard the dye gives a blue or violet colour to a white cloth with a hue angle of 240 to 345, more preferably 250 to 320, most preferably 250 to 280. The white cloth used in this test is bleached non-mercerised woven cotton sheeting.

Shading dyes are discussed in WO2005/003274, WO2006/032327(Unilever), WO 2006/032397(Unilever), WO2006/045275(Unilever), WO 2006/027086(Unilever), WO 2008/017570(Unilever), WO 2008/141880 (Unilever), WO2009/132870(Unilever), WO 2009/141173 (Unilever), WO 2010/099997(Unilever), WO 2010/102861 (Unilever), WO 2010/148624(Unilever), WO2008/087497 (P&G), WO2011/011799 (P&G), WO2012/054820 (P&G), WO2013/142495 (P&G) and WO2013/151970 (P&G).

Mono-azo dyes preferably contain a heterocyclic ring and are most preferably thiophene dyes. The mono-azo dyes are preferably alkoxylated and are preferably uncharged or anionically charged at pH=7. Alkoxylated thiophene dyes are discussed in WO/2013/142495 and WO/2008/087497. Preferred examples of thiophene dyes are shown below:

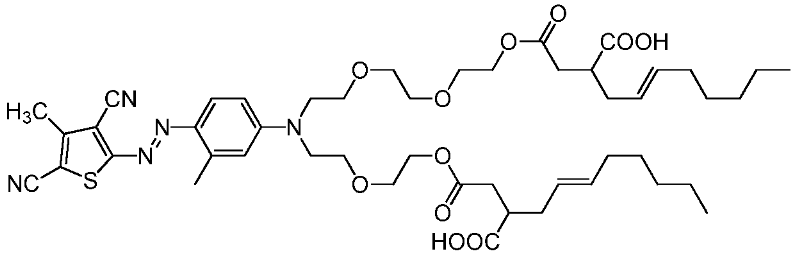

;

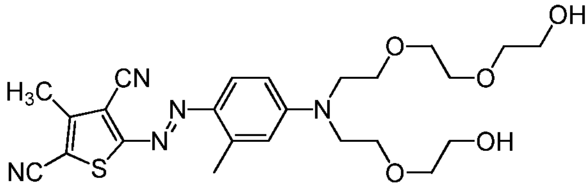

;

and,

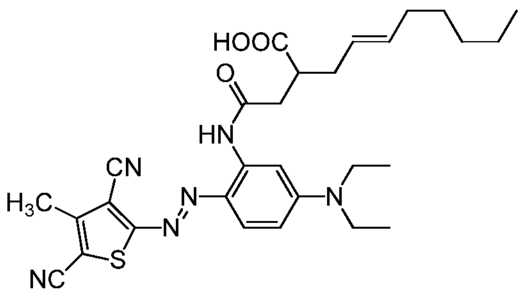

.

Bis-azo dyes are preferably sulphonated bis-azo dyes. Preferred examples of sulphonated bis-azo compounds are direct violet 7, direct violet 9, direct violet 11, direct violet 26, direct violet 31, direct violet 35, direct violet 40, direct violet 41, direct violet 51, Direct Violet 66, direct violet 99 and alkoxylated versions thereof. Alkoxylated bis-azo dyes are discussed in WO2012/054058 and WO2010/151906.

An example of an alkoxylated bis-azo dye is :

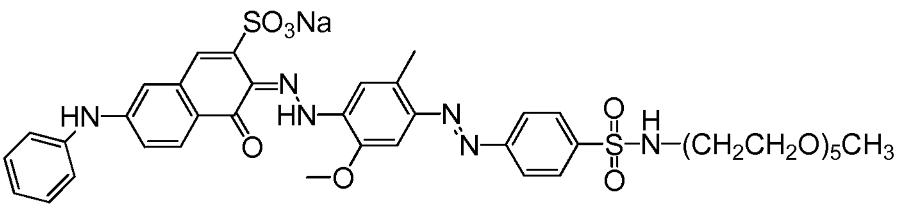

Azine dye are preferably selected from sulphonated phenazine dyes and cationic phenazine dyes. Preferred examples are acid blue 98, acid violet 50, dye with CAS-No 72749-80-5, acid blue 59, and the phenazine dye selected from:

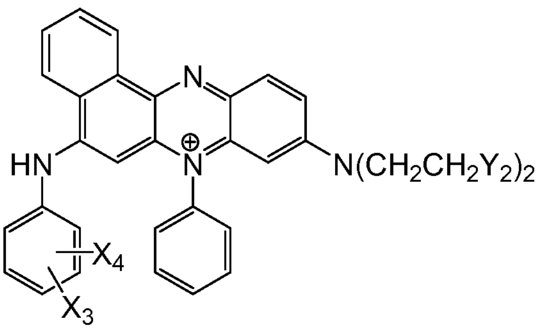

wherein:

$X_3$ is selected from: -H; -F; $-CH_3$; $-C_2H_5$; $-OCH_3$; and, $-OC_2H_5$;

$X_4$ is selected from: -H; $-CH_3$; $-C_2H_5$; $-OCH_3$; and, $-OC_2H_5$;

$Y_2$ is selected from: -OH; $-OCH_2CH_2OH$; $-CH(OH)CH_2OH$; $-OC(O)CH_3$; and, $C(O)OCH_3$.

The shading dye is preferably present in the composition in range from 0.0001 to 0.5 wt %, preferably 0.001 to 0.1 wt%. Depending upon the nature of the shading dye there are preferred ranges depending upon the efficacy of the shading dye which is dependent on class and particular efficacy within any particular class. As stated above the shading dye is a blue or violet shading dye.

A mixture of shading dyes may be used.

The shading dye is most preferably a reactive blue anthraquinone dye covalently linked to an alkoxylated polyethyleneimine. The alkoxylation is preferably selected from ethoxylation and propoxylation, most preferably propoxylation. Preferably 80 to 95 mol% of the N-H groups in the polyethylene imine are replaced with iso-propyl alcohol groups by propoxylation. Preferably the polyethylene imine before reaction with the dye and the propoxylation has a molecular weight of 600 to 1800.

An example structure of a preferred reactive anthraquinone covalently attached to a propoxylated polyethylene imine is:

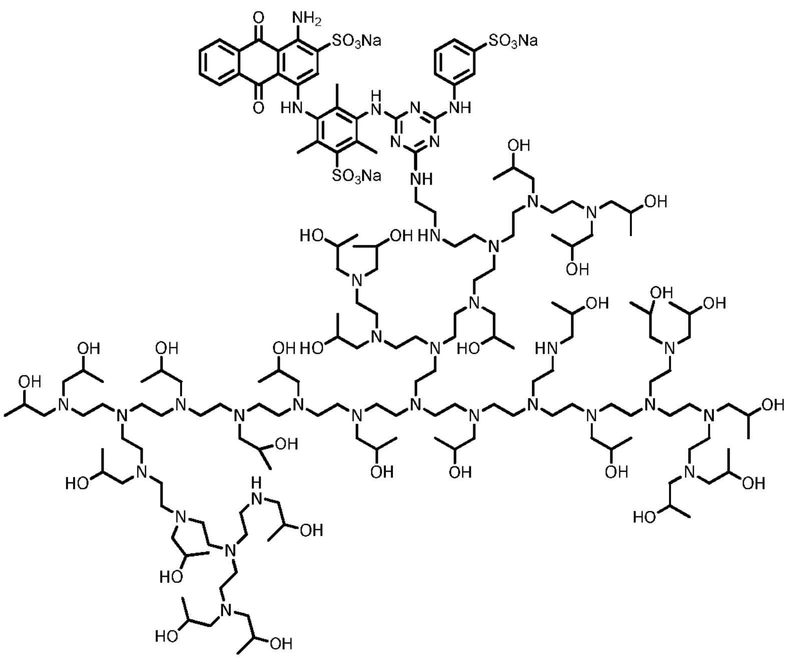

(Structure I).

Preferred reactive anthraquinone dyes are: Reactive blue 1; Reactive blue 2; Reactive blue 4; Reactive blue 5; Reactive blue 6; Reactive blue 12; Reactive blue 16; reactive blue 19; Reactive blue 24 ; Reactive blue 27; Reactive blue 29; Reactive blue 36; Reactive blue 44; Reactive blue 46 ; Reactive blue 47; reactive blue 49; Reactive blue 50; Reactive blue 53; Reactive blue 55; Reactive blue 61; Reactive blue 66; Reactive blue 68; Reactive blue 69; Reactive blue 74; Reactive blue 86; Reactive blue 93; Reactive blue 94; Reactive blue 101; Reactive blue103; Reactive blue114; Reactive blue117; Reactive blue125; Reactive blue141; Reactive blue142; Reactive blue 145; Reactive blue 149; Reactive blue 155; Reactive blue 164; Reactive blue 166; Reactive blue 177; Reactive blue 181; Reactive blue 185; Reactive blue 188; Reactive blue 189; Reactive blue 206; Reactive blue 208; Reactive blue 246; Reactive blue 247; Reactive blue 258; Reactive blue 261; Reactive blue 262; Reactive blue 263; and Reactive blue 172.

The dyes are listed according to Colour Index (Society of Dyers and Colourists/American Association of Textile Chemists and Colorists) classification.

## Enzymes

One or more enzymes are preferably present in a laundry composition of the invention and when practicing a method of the invention.

Preferably the level of each enzyme in the laundry composition of the invention is from 0.0001 wt% to 0.1 wt% protein.

Preferably the enzyme is selected from: proteases; lipases; and, cellulases, preferably a protease.

Especially contemplated enzymes include proteases, alpha-amylases, cellulases, lipases, peroxidases/oxidases, pectate lyases, and mannanases, or mixtures thereof.

Suitable lipases include those of bacterial or fungal origin. Chemically modified or protein engineered mutants are included. Examples of useful lipases include lipases from *Humicola* (synonym *Thermomyces*), e.g. from *H. lanuginosa* (*T. lanuginosus*) as described in EP 258 068 and EP 305 216 or from *H. insolens* as described in WO 96/13580, a *Pseudomonas* lipase, e.g. from *P. alcaligenes* or *P. pseudoalcaligenes* (EP 218 272), *P. cepacia* (EP 331 376), *P. stutzeri* (GB 1,372,034), *P. fluorescens, Pseudomonas* sp. strain SD 705 (WO 95/06720 and WO 96/27002), *P. wisconsinensis* (WO 96/12012), a *Bacillus* lipase, e.g. from *B. subtilis* (Dartois et al. (1993), Biochemica et Biophysica Acta, 1131, 253-360), *B. stearothermophilus* (JP 64/744992) or *B. pumilus* (WO 91/16422).

Other examples are lipase variants such as those described in WO 92/05249, WO 94/01541, EP 407 225, EP 260 105, WO 95/35381, WO 96/00292, WO 95/30744, WO 94/25578, WO 95/14783, WO 95/22615, WO 97/04079 and WO 97/07202, WO 00/60063.

Preferred commercially available lipase enzymes include Lipolase™ and Lipolase Ultra™, Lipex™ and Lipoclean™ (Novozymes A/S).

The method of the invention may be carried out in the presence of phospholipase classified as EC 3.1.1.4 and/or EC 3.1.1.32. As used herein, the term phospholipase is an enzyme which has activity towards phospholipids.

Phospholipids, such as lecithin or phosphatidylcholine, consist of glycerol esterified with two fatty acids in an outer (sn-1) and the middle (sn-2) positions and esterified with phosphoric acid in the third position; the phosphoric acid, in turn, may be esterified to an amino-alcohol. Phospholipases are enzymes which participate in the hydrolysis of phospholipids. Several types of phospholipase activity can be distinguished, including phospholipases $A_1$ and $A_2$ which hydrolyze one fatty acyl group (in the sn-1 and sn-2 position, respectively) to form lysophospholipid; and lysophospholipase (or phospholipase B) which can hydrolyze the remaining fatty acyl group in lysophospholipid. Phospholipase C and phospholipase D (phosphodiesterases) release diacyl glycerol or phosphatidic acid respectively.

Suitable proteases include those of animal, vegetable or microbial origin. Microbial origin is preferred. Chemically modified or protein engineered mutants are included. The protease may be a serine protease or a metallo protease, preferably an alkaline microbial protease or a trypsin-like protease. Preferred commercially available protease enzymes include Alcalase™, Savinase™, Primase™, Duralase™, Dyrazym™, Esperase™, Everlase™, Polarzyme™, and Kannase™, (Novozymes A/S), Maxatase™, Maxacal™, Maxapem™, Properase™, Purafect™, Purafect OxP™, FN2™, and FN3™ (Genencor International Inc.).

The method of the invention may be carried out in the presence of cutinase. classified in EC 3.1.1.74. The cutinase used according to the invention may be of any origin. Preferably cutinases are of microbial origin, in particular of bacterial, of fungal or of yeast origin.

Suitable amylases (alpha and/or beta) include those of bacterial or fungal origin. Chemically modified or protein engineered mutants are included. Amylases include, for example, alpha-amylases obtained from *Bacillus,* e.g. a special strain of *B. licheniformis,* described in more detail in GB 1,296,839, or the *Bacillus* sp. strains disclosed in WO 95/026397 or WO 00/060060. Commercially available amylases are Duramyl™, Termamyl™, Termamyl Ultra™, Natalase™, Stainzyme™, Fungamyl™ and BAN™ (Novozymes A/S), Rapidase™ and Purastar™ (from Genencor International Inc.).

Suitable cellulases include those of bacterial or fungal origin. Chemically modified or protein engineered mutants are included. Suitable cellulases include cellulases from the genera *Bacillus, Pseudomonas, Humicola, Fusarium, Thie-*

*lavia, Acremonium,* e.g. the fungal cellulases produced from *Humicola insolens, Thielavia terrestris, Myceliophthora thermophila,* and *Fusarium oxysporum* disclosed in US 4,435,307, US 5,648,263, US 5,691,178, US 5,776,757, WO 89/09259, WO 96/029397, and WO 98/012307. Commercially available cellulases include Celluzyme™, Carezyme™, Celluclean™, Endolase™, Renozyme™ (Novozymes A/S), Clazinase™ and Puradax HA™ (Genencor International Inc.), and KAC-500(B)™ (Kao Corporation). Celluclean™ is preferred.

Suitable peroxidases/oxidases include those of plant, bacterial or fungal origin. Chemically modified or protein engineered mutants are included. Examples of useful peroxidases include peroxidases from *Coprinus,* e.g. from C. *cinereus,* and variants thereof as those described in WO 93/24618, WO 95/10602, and WO 98/15257. Commercially available peroxidases include Guardzyme™ and Novozym™ 51004 (Novozymes A/S).

Further enzymes suitable for use are discussed in WO2009/087524, WO2009/090576, WO2009/107091, WO2009/111258 and WO2009/148983.

## Enzyme Stabilizers

Any enzyme present in the composition may be stabilized using conventional stabilizing agents, e.g., a polyol such as propylene glycol or glycerol, a sugar or sugar alcohol, lactic acid, boric acid, or a boric acid derivative, e.g., an aromatic borate ester, or a phenyl boronic acid derivative such as 4-formylphenyl boronic acid, and the composition may be formulated as described in e.g. WO 92/19709 and WO 92/19708.

Where alkyl groups are sufficiently long to form branched or cyclic chains, the alkyl groups encompass branched, cyclic and linear alkyl chains. The alkyl groups are preferably linear or branched, most preferably linear.

The indefinite article "a" or "an" and its corresponding definite article "the" as used herein means at least one, or one or more, unless specified otherwise.

## Experimental

### Example 1 Synthesis

1.25 moles of Resorcinol was heated under nitrogen, in a 500ml 3 neck round bottom flask, to 393K with 6.88 mmol of para-toluenesulfonic acid. At 393K the required number of moles of styrene was added dropwise over 1.5 hours then the reaction mixture stirred for 6 hours at 403K. Cooling produced a solid, which GC-MS analyses showed to be the styrenated resorcinol. This material was placed in clean and dry autoclave, then sodium methoxide methanol solution added under stirring and the autoclave purged with nitrogen. A pressure test was conducted before the full vacuum was applied and the reaction mixture was heated to 373 K for 2 hours to remove the methanol. The vacuum was compensated with nitrogen and then the reaction mixture heated to 433 K. At this temperature a safe amount of ethylene oxide (EO) was added and the pressure observed until the reaction started (pressure decreased). In the following 7 to 20 hours the rest of ethylene oxide was added at 433 K (4-5 bar) and stirring was continued for one to two hours to complete the reaction. Then the reaction mixture was cooled down to 373K and vacuum was applied for 30 minutes to remove residual ethylene oxide. After that, the vacuum was compensated with nitrogen, the reaction mixture cooled down to 353 K and filled into a flask.

### Example 2 redeposition benefit

An aqueous liquid laundry detergent was prepared of the following formulation:

| Ingredient | Weight% |
|---|---|
| Mono propylene glycol | 2.2 |
| Triethylamine | 1.5 |
| C12-C15 alcohol ethoxylate with 7 moles of ethylene oxide | 1.2 |
| Linear alkyl benzene sulfonate | 4.6 |
| Sodium laureth ether sulphate with 1 moles of ethylene oxide | 5.8 |
| Citric acid | 2.0 |
| $CaCl_2$ dihydrate | 0.2 |
| NaCl | 0.2 |

(continued)

| Ingredient | Weight% |
|---|---|
| Tinopal CBS-X (fluorescer BASF) | 0.3 |
| Sodium Hydroxide | To pH=8.4 |
| ASR dispersant | See text |
| Water | balance |

The formulation was used to wash eight 5 x 5cm knitted cotton cloth pieces in a tergotometer set at 200rpm. A one hour wash was conducted in 800ml of 26° French Hard water at 20°C, with 2.3g/L of the formulation. To simulate soil that could redeposit, 0.04g/L of 100% compressed carbon black (ex Alfa Aesur) was added to the wash liquor. To simulate oily sebaceous soil (7.2 g) of an SBL2004 soil strip (ex Warwick Equest) was added to the wash liquor.

Once the wash had been completed the cotton monitors were rinsed once in 400ml clean water, removed dried and the colour measured on a reflectometer and expressed as the CIE L*a*b* values. The cleaning anti-redeposition benefit was expressed as the ΔL value:

$$\Delta L = L(\text{dispersant}) - L(\text{control})$$

The larger the ΔL value the greater the prevention of deposition of the carbon black soil. 95% confidence limits based on the 8 separate cotton monitors were calculated. Formulations were made with and without the addition of 8.7wt% of the ASR dispersant: The results are shown below.

| n | ΔL | 95% |
|---|---|---|
| Monostyryl rescorcinol, n=8 | 2.8 | 0.4 |
| Distyryl rescorcinol, n=8 | 5.9 | 0.5 |
| Distryryl resorcinol n=17 | 3.5 | 0.5 |
| Distyryl rescorcinol, n=28 | 1.8 | 0.6 |

The dispersant prevents deposition of the carbon black soil to the cotton cloth.

## Claims

1. A laundry detergent composition comprising:

   (i) from 0.5 to 20 wt% of an alkoxylated substituted resorcinol dispersant of the following structure:

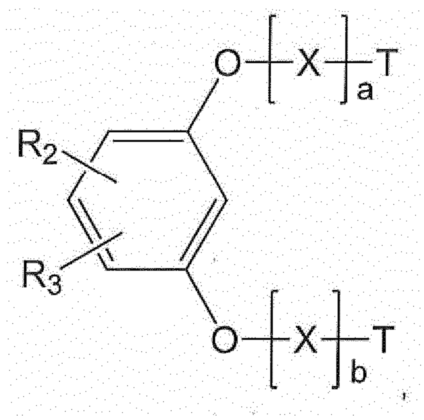

wherein

X is independently selected from: ethoxy; and, mixtures of ethoxy and propoxy groups where the number of ethoxy groups is greater than the number of propoxy groups, and wherein a + b = n and n is from 5 to 40;
$R_2$ and $R_3$ are independently selected from: H, C1 to C3 linear or branched alkyl aryl groups; and, aryl groups wherein at least one of $R_2$ and $R_3$ are selected from C1 to C3 linear or branched alkyl aryl groups; and, aryl groups;
T is selected from: H; $CH_3$; $SO_3^-$; $CH_2COO^-$; $PO_3^{2-}$; $C_2H_5$; n-propyl, i-propyl; n-butyl; t-butyl; and, sulfosuccinate, T is preferably H;

(ii) from 0 to 50 wt% surfactant, other than the alkoxylated substituted resorcinol dispersant;
(iii) an active selected from one or more of the following: from 0.001 to 3 wt % perfume; from 0.0001 to 0.5 wt % of a fluorescent agent and/or from 0.0001 wt% to 0.1 wt% shading dye;

wherein the composition comprises a perfume in the range of from 0.001 to 3 wt %.

**2.** A laundry detergent composition according to claim 1, wherein $R_2$ and $R_3$ are selected from: H; styryl; and, cumyl.

**3.** A laundry detergent composition according to claim 1, wherein $R_2$ and $R_3$ are styryl and both $R_2$ and $R_3$ are respectively in the ortho position to the -O-$[X]_n$-T groups.

**4.** A laundry detergent composition according to claim 1, 2 or 3, wherein X is ethoxy.

**5.** A laundry detergent composition according to any one of the preceding claims, wherein n is from 6 to 34.

**6.** A laundry detergent composition according to any one of the preceding claims, wherein the surfactant, other than the alkoxylated substituted resorcinol dispersant, is selected from: anionic and non-ionic surfactants and the level of surfactant is from 4 to 40 wt%.

**7.** A laundry detergent composition according to claim 6, wherein the weight fraction of non-ionic surfactant/anionic surfactant is from 0 to 0.3.

**8.** A laundry detergent composition according claim 6 or 7, wherein the anionic surfactant is selected from: linear alkyl benzene sulphonates; alkyl sulphates; and, alkyl ether sulphates; and mixtures thereof.

**9.** A laundry detergent composition according to any one of the preceding claims, wherein the level of the alkoxylated substituted resorcinol dispersant from 1 to 10 wt%.

**10.** A laundry detergent composition according to any one of the preceding claims, wherein T is H.

**11.** A laundry detergent composition according to any one of the preceding claims, wherein n is selected from: 6; 7; 8; 9; 10; 11; 12; 13; 14; 15; 16; 17; 18; 19 and 20

**12.** A domestic method of treating a textile, the method comprising the steps of:

(i) treating a textile with an aqueous solution of the alkoxylated substituted resorcinol dispersant the aqueous solution comprising from 10 ppm to 5000 ppm of the alkoxylated substituted resorcinol dispersant as defined in any one of the preceding claims; and, 0 to 6 g/L of a surfactant, other than the alkoxylated substituted resorcinol dispersant; and an active selected from: 0.1 ppm to 100 ppm of perfume, 1 ppb to 5 ppm of fluorescent agent, and 1 ppb to 1 ppm of shading dye,
(ii) optionally rinsing and drying the textile.

**13.** A domestic method of treating a textile according to claim 12 wherein the method the level of the perfume in the aqueous solution is from 1 to 10 ppm.

## Patentansprüche

1. Waschmittelzusammensetzung, umfassend:

(i) von 0,5 bis 20 Gew.-% eines alkoxylierten substituierten Resorcin-Dispergiermittels der folgenden Struktur:

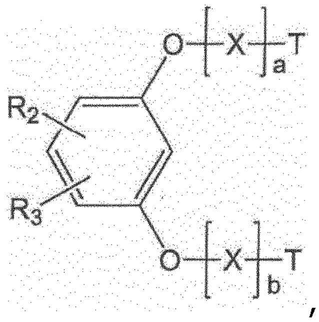

worin

X unabhängig ausgewählt ist aus: Ethoxy- und Mischungen von Ethoxy- und Propoxy-Gruppen, wobei die Anzahl der Ethoxy-Gruppen größer als die Anzahl der Propoxy-Gruppen ist und worin a + b = n und n von 5 bis 40 beträgt;

$R_2$ und $R_3$ unabhängig ausgewählt sind aus H, linearen oder verzweigten $C_1$- bis $C_3$-Alkylaryl-Gruppen und Aryl-Gruppen, wobei mindestens eine von $R_2$ und $R_3$ ausgewählt ist aus linearen oder verzweigten $C_1$- bis $C_3$-Alkylaryl-Gruppen, und Aryl-Gruppen;

T ausgewählt ist aus: H; $CH_3$; $SO^-_3$; $CH_2COO^-$; $PO_3^{2-}$; $C_2H_5$; n-Propyl, i-Propyl; n-Butyl; t-Butyl und Sulfosuccinat, wobei T vorzugsweise H ist;

(ii) von 0 bis 50 Gew.-% Tensid, außer dem alkoxylierten substituierten Resorcin-Dispergiermittel;

(iii) ein aktives Mittel, ausgewählt unter einem oder mehreren von Folgendem: von 0,001 bis 3 Gew.-% Parfüm; von 0,0001 bis 0,5 Gew.-% eines fluoreszierenden Mittels und/oder von 0,0001 Gew.-% bis 0,1 Gew.-% Nuancierfarbstoff;

wobei die Zusammensetzung ein Parfüm in dem Bereich von 0,001 bis 3 Gew.-% umfasst.

2. Waschmittelzusammensetzung nach Anspruch 1, wobei $R_2$ und $R_3$ unter H, Styryl und Cumyl ausgewählt sind.

3. Waschmittelzusammensetzung nach Anspruch 1, wobei $R_2$ und $R_3$ Styryl sind und sich sowohl $R_2$ als auch $R_3$ in der ortho-Position zu den -O-$[X]_n$-T-Gruppen befinden.

4. Waschmittelzusammensetzung nach Anspruch 1, 2 oder 3, wobei X Ethoxy ist.

5. Waschmittelzusammensetzung nach irgendeinem der vorhergehenden Ansprüche, wobei n von 6 bis 34 beträgt.

6. Waschmittelzusammensetzung nach irgendeinem der vorhergehenden Ansprüche, wobei das Tensid, außer dem alkoxylierten substituierten Resorcin-Dispergiermittel, unter anionischen und nicht-ionischen Tensiden ausgewählt ist und der Gehalt des Tensids von 4 bis 40 Gew.-% beträgt.

7. Waschmittelzusammensetzung nach Anspruch 6, wobei der Gewichtsanteil von nicht-ionischem Tensid/anionischem Tensid von 0 bis 0,3 beträgt.

8. Waschmittelzusammensetzung nach Anspruch 6 oder 7, wobei das anionische Tensid unter linearen Alkylbenzolsulfonaten, Alkylsulfaten und Alkylethersulfaten und Mischungen davon ausgewählt ist.

9. Waschmittelzusammensetzung nach irgendeinem der vorhergehenden Ansprüche, wobei der Gehalt des alkoxylierten substituierten Resorcin-Dispergiermittels von 1 bis 10 Gew.-% beträgt.

**10.** Waschmittelzusammensetzung nach irgendeinem der vorhergehenden Ansprüche, wobei T H ist.

**11.** Waschmittelzusammensetzung nach irgendeinem der vorhergehenden Ansprüche, wobei n ausgewählt ist unter 6; 7; 8; 9; 10; 11; 12; 13; 14; 15; 16; 17; 18; 19 und 20.

**12.** Häusliches Verfahren zur Behandlung eines Textils, wobei das Verfahren die Schritte umfasst:

(i) Behandeln eines Textils mit einer wässrigen Lösung des alkoxylierten substituierten Resorcin-Dispergiermittels, wobei die wässrige Lösung 10 ppm bis 5000 ppm des alkoxylierten substituierten Resorcin-Dispergiermittels, wie in irgendeinem der vorhergehenden Ansprüche definiert, und 0 bis 6 g/l eines Tensids, außer dem alkoxylierten substituierten Resorcin-Tensid, und ein aktives Mittel, ausgewählt unter 0,1 ppm bis 100 ppm Parfüm, 1 ppb bis 5 ppm fluoreszierendes Mittel und 1 ppb bis 1 ppm Nuancierfarbstoff, umfasst,
(ii) optional Spülen und Trocknen des Textils.

**13.** Häusliches Verfahren zur Behandlung eines Textils nach Anspruch 12, wobei beim Verfahren der Gehalt des Parfüms in der wässrigen Lösung von 1 bis 10 ppm beträgt.

**Revendications**

**1.** Composition de détergent de lessive comprenant :

(i) de 0,5 à 20 % en masse d'un dispersant de résorcinol substitué alcoxylé de la structure suivante :

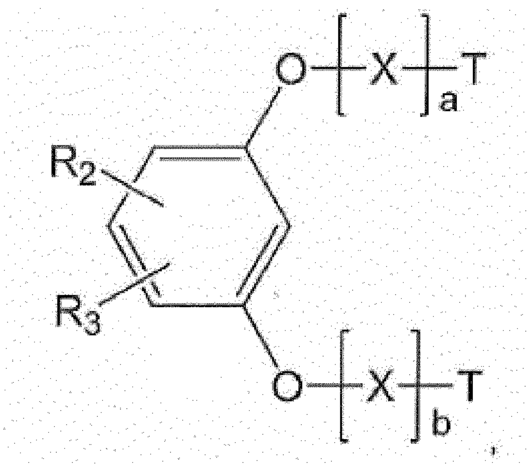

dans laquelle

X est indépendamment choisi parmi : éthoxy ; et, des mélanges de groupes éthoxy et propoxy où le nombre de groupes éthoxy est supérieur au nombre de groupes propoxy, et dans laquelle a + b = n et n est de 5 à 40 ;
$R_2$ et $R_3$ sont indépendamment choisis parmi : H, des groupes alkylaryle linéaires ou ramifiés en C1 à C3 ; et, des groupes aryle dans laquelle au moins un de $R_2$ et $R_3$ est choisi parmi des groupes alkylaryle linéaires ou ramifiés en C1 à C3 ; et, des groupes aryle ;
T est choisi parmi : H ; $CH_3$ ; $SO_3^-$ ; $CH_2COO^-$ ; $PO_3^{2-}$ ; $C_2H_5$ ; n-propyle, i-propyle ; n-butyle ; t-butyle ; et, sulfossuccinate, T est de préférence H ;

(ii) de 0 à 50 % en masse de tensioactif, différent du dispersant de résorcinol substitué alcoxylé ;
(iii) un actif choisi parmi un ou plusieurs des suivants : de 0,001 à 3 % en masse de parfum ; de 0,0001 à 0,5 % en masse d'un agent fluorescent et/ou de 0,0001 % en masse à 0,1 % en masse de colorant d'ombrage ;

dans laquelle la composition comprend un parfum dans l'intervalle de 0,001 à 3 % en masse.

**2.** Composition de détergent de lessive selon la revendication 1, dans laquelle $R_2$ et $R_3$ sont choisis parmi : H ; styryle ; et, cumyle.

**3.** Composition de détergent de lessive selon la revendication 1, dans laquelle $R_2$ et $R_3$ sont le styryle et à la fois $R_2$ et $R_3$ sont respectivement dans la position ortho par rapport aux groupes -O-$[X]_n$-T.

**4.** Composition de détergent de lessive selon la revendication 1, 2 ou 3, dans laquelle X est l'éthoxy.

**5.** Composition de détergent de lessive selon l'une quelconque des revendications précédentes, dans laquelle n est de 6 à 34.

**6.** Composition de détergent de lessive selon l'une quelconque des revendications précédentes, dans laquelle le tensioactif, différent du dispersant de résorcinol substitué alcoxylé, est choisi parmi : des tensioactifs anioniques et non-ioniques et la teneur en tensioactif est de 4 à 40 % en masse.

**7.** Composition de détergent de lessive selon la revendication 6, dans laquelle la fraction massique de tensioactif non-ionique/tensioactif anionique est de 0 à 0,3.

**8.** Composition de détergent de lessive selon la revendication 6 ou 7, dans laquelle le tensioactif anionique est choisi parmi : des benzène-sulfonates d'alkyle linéaires, des sulfates d'alkyle ; et, des sulfates d'alkyl-éther ; et des mélanges de ceux-ci.

**9.** Composition de détergent de lessive selon l'une quelconque des revendications précédentes, dans laquelle la teneur du dispersant de résorcinol substitué alcoxylé est de 1 à 10 % en masse.

**10.** Composition de détergent de lessive selon l'une quelconque des revendications précédentes, dans laquelle T est H.

**11.** Composition de détergent de lessive selon l'une quelconque des revendications précédentes, dans laquelle n est choisi parmi : 6 ; 7 ; 8 ; 9 ; 10 ; 11 ; 12 ; 13 ; 14 ; 15 ; 16 ; 17 ; 18 ; 19 et 20.

**12.** Procédé domestique de traitement d'un textile, le procédé comprenant les étapes de :

(i) traitement d'un textile avec une solution aqueuse du dispersant de résorcinol substitué alcoxylé la solution aqueuse comprenant de 10 ppm à 5 000 ppm du dispersant de résorcinol substitué alcoxylé comme défini dans l'une quelconque des revendications précédentes ; et, de 0 à 6 g/L d'un tensioactif, différent du dispersant de résorcinol substitué alcoxylé ; et un actif choisi parmi : 0,1 ppm à 100 ppm de parfum, 1 ppb à 5 ppm d'agent fluorescent, et 1 ppb à 1 ppm de colorant d'ombrage,
(ii) éventuellement rinçage et séchage du textile.

**13.** Procédé domestique de traitement d'un textile selon la revendication 12, dans lequel procédé la teneur du parfum dans la solution aqueuse est de 1 à 10 ppm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016041679 A
- GB 800159 A
- US 7341674 B
- EP 328177 A
- EP 070074 A
- EP 0384070 A
- WO 2005003274 A
- WO 2006032327 A
- WO 2006032397 A
- WO 2006045275 A
- WO 2006027086 A
- WO 2008017570 A
- WO 2008141880 A
- WO 2009132870 A
- WO 2009141173 A
- WO 2010099997 A
- WO 2010102861 A
- WO 2010148624 A
- WO 2008087497 A
- WO 2011011799 A
- WO 2012054820 A
- WO 2013142495 A
- WO 2013151970 A
- WO 2012054058 A
- WO 2010151906 A
- EP 258068 A
- EP 305216 A
- WO 9613580 A
- EP 218272 A
- EP 331376 A
- GB 1372034 A
- WO 9506720 A
- WO 9627002 A
- WO 9612012 A
- JP 64744992 B
- WO 9116422 A
- WO 9205249 A
- WO 9401541 A
- EP 407225 A
- EP 260105 A
- WO 9535381 A
- WO 9600292 A
- WO 9530744 A
- WO 9425578 A
- WO 9514783 A
- WO 9522615 A
- WO 9704079 A
- WO 9707202 A
- WO 0060063 A
- GB 1296839 A
- WO 95026397 A
- WO 00060060 A
- US 4435307 A
- US 5648263 A
- US 5691178 A
- US 5776757 A
- WO 8909259 A
- WO 96029397 A
- WO 98012307 A
- WO 9324618 A
- WO 9510602 A
- WO 9815257 A
- WO 2009087524 A
- WO 2009090576 A
- WO 2009107091 A
- WO 2009111258 A
- WO 2009148983 A
- WO 9219709 A
- WO 9219708 A


### Non-patent literature cited in the description


- **SCHWARTZ ; PERRY.** Surface Active Agents. Interscience, 1949, vol. 1
- **SCHWARTZ ; PERRY ; BERCH.** SURFACE ACTIVE AGENTS. Interscience, 1958, vol. 2
- McCutcheon's Emulsifiers and Detergents. Manufacturing Confectioners Company
- **H. STACHE.** Tenside-Taschenbuch. Carl Hauser Verlag, 1981
- Anionic Surfactants: Organic Chemistry. Marcel Dekker, 1996
- Cosmetic, Toiletry and Fragrance Association. International Buyers Guide. CFTA Publications, 1992
- OPD. Chemicals Buyers Directory 80th Annual Edition. Schnell Publishing Co, 1993
- Fenaroli's Handbook of Flavor Ingredients. CRC Press, 1975
- Synthetic Food Adjuncts. Van Nostrand, 1947
- **S. ARCTANDER.** *Perfume and Flavor Chemicals,* 1969

- **POUCHER.** *Journal of the Society of Cosmetic Chemists,* 1955, vol. 6 (2), 80
- **H ZOLLINGER.** Color Chemistry Synthesis, Properties and Applications of Organic Dyes and Pigments. Wiley VCH, 2003
- Industrial Dyes Chemistry. Properties Applications. Wiley-VCH, 2003
- **DARTOIS et al.** *Biochemica et Biophysica Acta,* 1993, vol. 1131, 253-360